# DEMANDE DE BREVET EUROPEEN

(11) **EP 1 726 474 A2**
(43) Date de publication de la demande: **29.11.2006**
(21) Numéro de dépôt: 06300452.7
(22) Date de dépôt: 10.05.2006
(51) Int. Cl.: B60N 2/30

(54) **Siège de véhicule automobile pliable et véhicule correspondant**

(30) Priorité: 23.05.2005 FR 0551330
(71) Demandeur: Renault SAS, 92100 Boulogne Billancourt (FR)
(72) Inventeur: Legrand, Jean-Pierre, 28300, BERCHERES SAINT GERMAIN (FR)

(57) **Abrégé**

L'invention concerne un siège (10) pliable de véhicule automobile agencé sur un plancher (26), du type comportant une assise (12), un dossier (14), des moyens d'articulation (16) aptes à permettre le déplacement du siège (10) entre une position déployée d'utilisation dans laquelle le dossier (14) est sensiblement vertical et l'assise (12) sensiblement horizontale au dessus du plancher, et une position repliée de rangement dans laquelle le dossier (14) et l'assise (12) sont sensiblement parallèles et horizontaux, caractérisé en ce que l'assise (12) comporte un logement (24) destiné à recevoir, au moins en partie, le dossier (14) dans la position repliée du siège (10). L'invention concerne également un véhicule comportant un tel siège.

## Description

L'invention concerne un siège de véhicule pliable. Plus particulièrement, il s'agit d'un siège de véhicule adapté pour un stockage dans une cavité du plancher utilisée en tant que bac de rangement et un véhicule correspondant.

Les véhicules actuels comportent généralement des deuxièmes et troisièmes rangées de sièges qui sont placés derrière les sièges du conducteur et du passager avant (première rangée). Dans la pratique, les propriétaires de ces véhicules expriment le besoin de pouvoir enlever ou replier temporairement des sièges afin d'augmenter le volume du coffre et transporter les objets encombrants. C'est pourquoi, certains véhicules ont été, jusqu'ici, équipés avec des deuxièmes et troisièmes rangées de sièges qui peuvent être stockées dans des bacs ou dans des renfoncements situés à l'intérieur du plancher.

On connaît, par exemple, la publication américaine US 5 195 795 concernant un siège escamotable de ce type. Ce siège présente cependant plusieurs inconvénients. Notamment, il se déploie vers l'arrière du décrochement de plancher dans lequel il est rangé. Après déploiement, l'espace vide laissé par le siège ne peut donc être utilisé comme volume de coffre.

Afin de proposer un autre siège pliable, la publication FR 2 829 441 propose un siège pour véhicule automobile, comprenant une assise, un dossier monté articulé sur une assise, et des moyens d'articulation aptes à permettre le déplacement du dossier entre une configuration d'utilisation dans laquelle il est sensiblement vertical et une configuration rangée dans laquelle il est rabattu sur l'assise et rangé à l'arrière dans un renfoncement du plancher servant de bac de rangement.

Certes, le siège pliable, décrit dans cette publication, permet d'augmenter le volume de coffre quand celui-ci est déployé puisque le bac de rangement, situé derrière le siège déployé, peut être utilisé. Cependant, lorsque le siège est dans sa configuration rangée, le volume du coffre est largement réduit car l'encombrement en épaisseur du siège est conséquent, ceci résultant des épaisseurs additionnées du dossier et de l'assise de siège.

L'invention vise à pallier ces inconvénients en proposant un siège pliable qui soit confortable pour les utilisateurs et qui permette en même temps un encombrement réduit en épaisseur lorsque le siège est plié dans son bac de rangement.

A cet effet, l'invention fournit un siège pliable de véhicule automobile agencé sur un plancher, du type comportant une assise délimitée par une face supérieure d'assise et une face inférieure d'assise, un dossier délimité par une face avant et une face arrière, des moyens d'articulation aptes à permettre le déplacement du siège entre une position déployée d'utilisation dans laquelle le dossier est sensiblement vertical et l'assise sensiblement horizontale au dessus du plancher, et une position repliée dans laquelle le dossier et l'assise sont sensiblement parallèles et horizontaux, caractérisé en ce que l'assise comporte un logement destiné à recevoir, au moins en partie, le dossier dans la position repliée du siège.

Selon le mode de réalisation de l'invention, le logement peut être formé dans la face inférieure d'assise et peut être ouvert verticalement vers le bas.

Selon une caractéristique de l'invention, la face inférieure d'assise et la face avant du dossier peuvent être en vis-à-vis lorsque le siège est dans sa position repliée.

Avantageusement, la partie inférieure du dossier peut se ranger dans le logement.

Selon le mode de réalisation préféré de l'invention, les moyens d'articulation peuvent comprendre :
- un premier jeu de bielles, articulé d'une part à la partie avant de l'assise et d'autre part au plancher, apte à permettre le basculement de l'assise par rapport au plancher,
- un deuxième jeu de bielles, articulé d'une part à la partie arrière de l'assise et d'autre part de manière coulissante au dossier, apte à solidariser le dossier par rapport à l'assise, et
- un troisième jeu de bielles, articulé d'une part à la partie inférieure du dossier et d'autre part à un support appartenant au châssis du véhicule, apte à permettre le basculement du dossier par rapport au logement.

Avantageusement, le passage de la position repliée à la position déployée d'utilisation du siège s'effectue par un basculement vers l'avant du premier jeu de bielles permettant le mouvement de l'assise par rapport au plancher et ainsi le basculement vers l'avant du troisième jeu de bielle, le deuxième jeu de bielles étant apte à maintenir le siège en position déployée d'utilisation.

Enfin, l'invention concerne aussi un véhicule automobile comprenant le siège précédemment décrit, caractérisé en ce que le plancher comporte une cavité de rangement dans laquelle, dans la position repliée, le siège est entièrement rangé.

L'invention est maintenant décrite en référence aux dessins annexés, donnés à titre non limitatifs, dans lesquels :
- les figures 1 à 4 représentent, vue en perspective de dessus, le siège selon l'invention dans le mode de réalisation préféré, dans des étapes successives de sa transformation entre une position repliée dans un bac de rangement (figure 1) et une position déployée d'utilisation (figure 4),
- la figure 5 est une vue de côté du siège selon l'invention dans la position repliée de rangement,
- la figure 6 est une vue de côté du siège selon l'invention dans une position intermédiaire,
- la figure 7 est une vue de côté du siège selon l'invention dans la position déployée d'utilisation, et
- la figure 8 est une vue en perspective de dessous du siège selon l'invention dans la configuration d'utilisation.

Le siège 10 selon l'invention est sensiblement symétrique par rapport à un plan vertical longitudinal passant par son milieu. Pour une meilleure clarté, les organes situés à droite du siège sont repérés avec des références identiques à celles utilisées pour repérer les organes correspondants situés à gauche du siège, mais ces références sont affectées du signe prime.

On définit les termes avant et arrière par rapport à la direction longitudinale du véhicule, l'avant désignant le sens de déplacement normal du véhicule, et l'arrière le sens opposé.

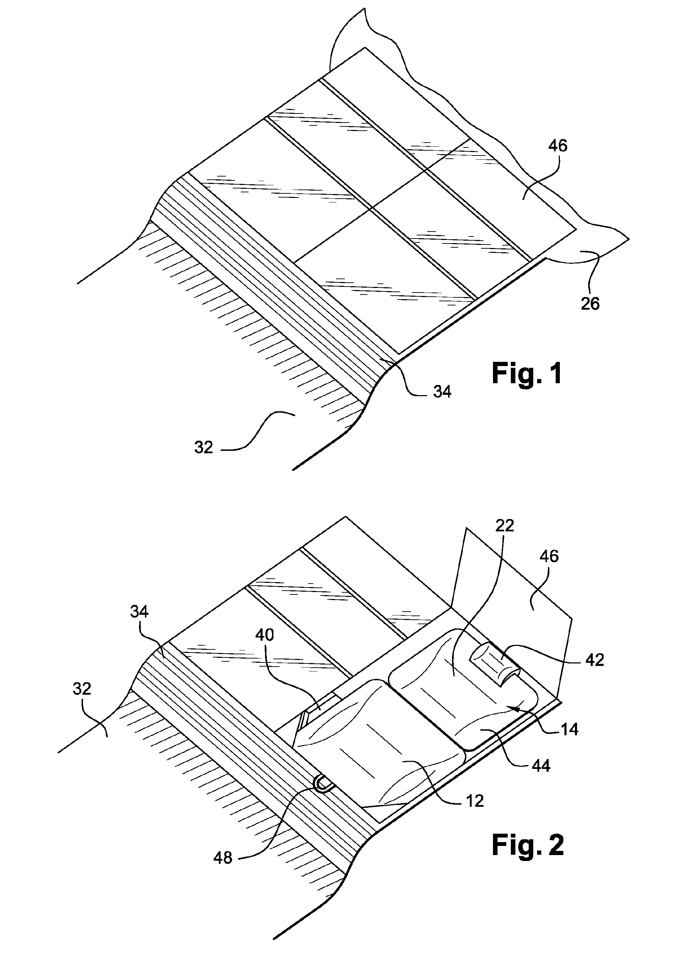

Le siège 10 représenté sur les figures 1 à 4 est escamotable dans un plancher 26 d'un coffre de véhicule automobile.

Le plancher 26, sensiblement horizontal, comporte successivement de l'avant vers l'arrière un décrochement avant 32, destiné à recevoir les pieds d'un passager assis sur le siège 10, une plate-forme centrale 34 conformée pour servir d'appui au siège 10 dans la position déployée d'utilisation et une cavité arrière 28 apte à recevoir le siège 10 dans la position repliée de rangement.

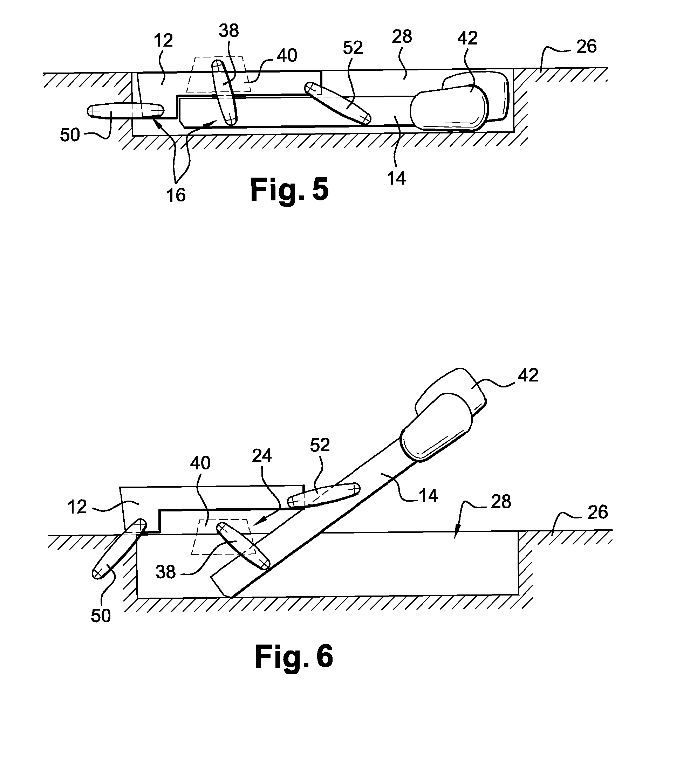

Comme illustré sur la figure 5, le siège 10 comporte un dossier 14 et une assise 12.

Le dossier 14 est monté articulé autour de l'assise 12 grâce à deux bielles 38 et 38'. Ces dernières sont articulées, d'une part, à la partie inférieure du dossier 14, et d'autre part à un support 40 solidaire du châssis du véhicule. Ainsi, les bielles 38 et 38' vont permettre le basculement du dossier 14 sous l'assise 12 au cours du passage, par exemple, d'une position déployée d'utilisation dans laquelle le dossier 14 est sensiblement vertical et l'assise 12 sensiblement horizontale au dessus du plancher, à une position repliée dans laquelle le dossier 14 et l'assise 12 sont sensiblement parallèles et horizontaux, et rangés à l'arrière dans la cavité de rangement 28.

Le dossier 14, décrit dans sa position déployée d'utilisation, comporte une face avant, constituée par un coussin de dossier 22 et une face arrière (non représentée) qui peut être une nappe de dossier.

Le coussin de dossier, par exemple en mousse recouverte d'un tissu, est de préférence épais pour assurer le confort du passager. Le dossier comporte, en outre, en partie supérieure un appui-tête 42 et des coussins latéraux 44 et 44' de manière à offrir un soutien latéral au dos du passager et ainsi un confort sensiblement identique à un siège non pliable.

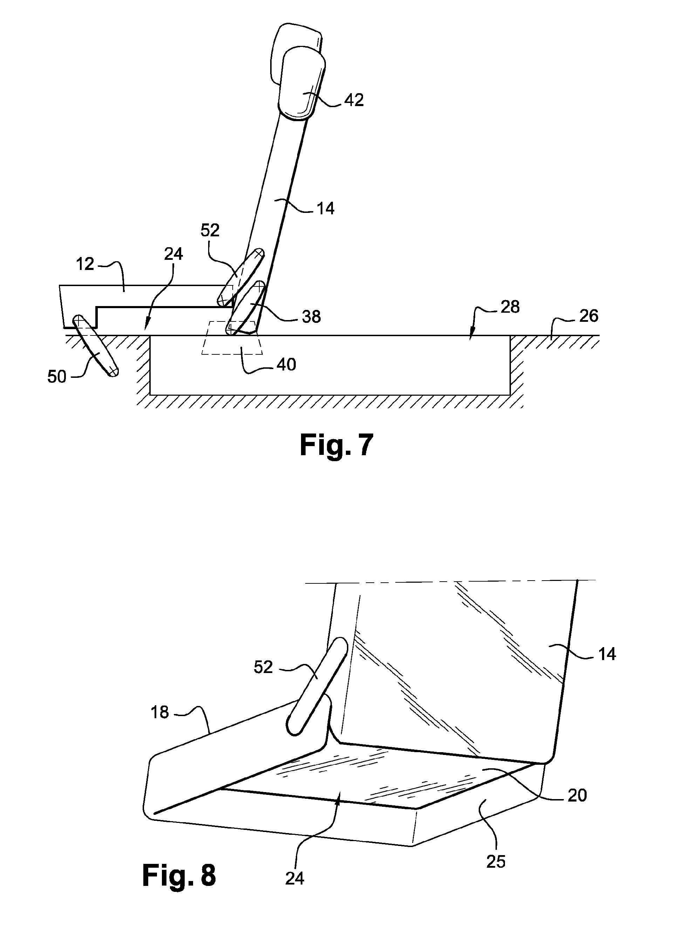

L'assise 12 comporte une face supérieure 18 constituée par coussin d'assise, de préférence peu épais, monté sur une nappe d'assise 20 représentant la face inférieure de l'assise (représentée sur la figure 8). Sous cette nappe 20 se trouve un logement 24 délimité par des parois 25 et permettant de loger le dossier 14 dans la configuration rangée du siège. Ces parois 25 permettent, en outre, de donner une impression d'assise épaisse et donc de confort lorsque le siège est déployé.

Le logement 24 est donc ouvert verticalement vers le bas et possède des dimensions sensiblement identiques à celle de l'assise et une hauteur correspondant sensiblement à l'épaisseur du dossier puisque ce dernier se range sous l'assise 12. Lorsque le siège se trouve dans la position repliée de rangement, la partie inférieure du coussin de dossier 22 et la nappe 20 sont dirigés l'un vers l'autre.

Les positions successives de la transformation du siège 10 depuis la position déployée d'utilisation jusqu'à la position repliée de rangement et le fonctionnement du siège 10 selon l'invention sont décrites ci-dessous, en regard des figures 1 à 4.

Dans la position repliée de rangement, représentée sur la figure 1, le siège 10 est complètement dissimulé dans la cavité 28 par un tapis escamotable 46 assurant la fonction de raideur de plancher. Par ailleurs, le tapis 46 ainsi disposé permet aussi de supporter des charges comme des bagages sans que le siège 10, reposant dans le fond de la cavité 28, ne soit comprimé.

Comme illustré sur la figure 2, le tapis 46 se replie sur lui-même vers l'arrière pour permettre la sortie du siège 10.

Le dossier 14 est alors visible partiellement. En effet, seul la partie inférieure du dossier 14 se range dans le logement 24, la partie supérieure du dossier 14, l'appui-tête 42, et les coussins latéraux 44 n'étant pas masqués sous l'assise 12.

Le volume occupé par le siège 10 dans la position repliée de rangement est donc avantageusement restreint, la longueur de la cavité 28 pouvant être aussi faible que la somme de la longueur du dossier 14 et de l'appui-tête 42, et sa hauteur être à peine supérieure au cumul des épaisseurs du dossier 14 et du coussin d'assise 18 peu épais. La compacité du siège 10 en position repliée de rangement permet donc son installation dans des véhicules dont le volume intérieur est restreint.

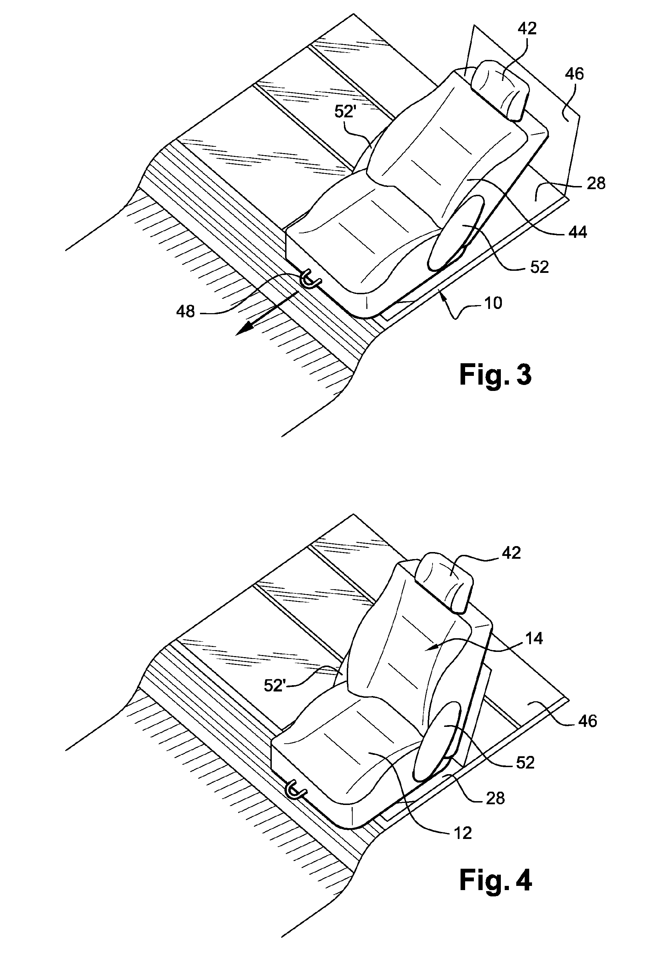

En référence aux figures 3 et 4, pour déployer le siège manuellement, l'utilisateur tire sensiblement vers l'avant une poignée de manoeuvre 48 solidaire de l'extrémité avant de l'assise 12, pour élever cette dernière.

Un premier jeu de deux bielles 50 et 50', visible sur les figures 5 à 7, se redresse en tournant vers l'avant jusqu'à ce que les parois 25 du logement 24 prennent appui sur la plate forme centrale 34. Ces bielles 50 et 50' sont articulées, d'une part, à la partie avant de l'assise 12 et d'autre part au châssis du véhicule. Ainsi, elles permettent le basculement de l'assise au cours du passage, par exemple, de la position repliée de rangement à la position déployée d'utilisation. En même temps, le dossier 14 se redresse grâce au troisième jeu de bielle 38 et 38' de l'une à l'autre des configurations et se bloque en position d'utilisation grâce à deuxième jeu de bielles 52 et 52' monté coulissant sur le dossier 14 et de manière fixe sur l'assise 12 pour maintenir le dossier 14 par rapport cette dernière et ainsi éviter tout basculement lorsque l'utilisateur repose son dos contre le dossier 14.

Le siège 10 est alors en position déployée d'utilisation. Des moyens de verrouillage, par exemple au niveau des articulations des bielles sont prévus si cela s'avère nécessaire.

La cavité 28 utilisée pour ranger le siège 10 est alors vide et disponible derrière le passager comme espace de rangement, ce qui constitue un avantage important de la présente invention. Il pourra être obturé grâce au tapis escamotable 46.

Le fond de cet espace est en outre très avantageusement en contrebas de la plate-forme centrale 34. Ainsi, en cas de glissement des bagages vers l'avant du véhicule, par exemple en cas d'accident, ces derniers ne sont pas projetés contre le dossier 14, mais sont bloqués dans le décrochement arrière 28 par la marche que constitue la plate-forme centrale 34.

Avantageusement encore, l'appui des parois formant le logement 24 sur la plate-forme centrale 34 se fait sur pratiquement tout le périmètre de l'assise, ce qui permet une stabilité remarquable du siège 10 dans sa configuration d'utilisation.

Avantageusement toujours, le déploiement du siège est possible en une seule main.

En outre, aucun moyen de blocage du siège 10 n'est requis quand le siège 10 est en position repliée de rangement.

La transformation du siège depuis la position déployée d'utilisation jusqu'à la position repliée de rangement s'effectue selon un mouvement contraire à celui décrit ci-dessus. L'utilisateur doit seulement pousser l'assise vers l'arrière, la suite du rangement se faisant sous l'effet du poids du siège 10.

Bien entendu, l'invention n'est pas limitée au mode de réalisation décrit, fourni à titre d'exemple illustratif et non limitatif. Par exemple, le logement 24 pourrait avoir une autre forme et être ouvert longitudinalement vers l'arrière.

## Revendications

1. Siège (10) pliable de véhicule automobile agencé sur un plancher (26), du type comportant :
- une assise (12) délimitée par une face supérieure d'assise (18) et une face inférieure d'assise (20),
- un dossier (14) délimité par une face avant (22) et une face arrière,
- des moyens d'articulation (16) aptes à permettre le déplacement du siège (10) entre une position déployée d'utilisation dans laquelle le dossier (14) est sensiblement vertical et l'assise (12) sensiblement horizontale au dessus du plancher, et une position repliée dans laquelle le dossier (14) et l'assise (12) sont sensiblement parallèles et horizontaux,
**caractérisé en ce que** l'assise (12) comporte un logement (24) délimité par des parois (25) destiné à recevoir, au moins en partie, le dossier (14) dans la position repliée du siège (10).

2. Siège selon la revendication 1, **caractérisé en ce que** le logement (24) est formé dans la face inférieure d'assise (20) et est ouvert verticalement vers le bas.

3. Siège selon l'une des revendications 1 ou 2,
**caractérisé en ce que** la face inférieure d'assise (20) et la face avant (22) du dossier sont en vis-à-vis lorsque le siège (10) est dans sa position repliée.

4. Siège selon l'une des revendications précédentes,
**caractérisé en ce que** la partie inférieure du dossier (14) se range dans le logement (24).

5. Siège selon l'une des revendications précédentes,
**caractérisé en ce que** les moyens d'articulation (16) comprennent :
- un premier jeu de bielles (50) et (50'), articulé d'une part à la partie avant de l'assise (12) et d'autre part au plancher (26), apte à permettre le basculement de l'assise (12) par rapport au plancher,
- un deuxième jeu de bielles (52, 52'), articulé d'une part à la partie arrière de l'assise (12) et d'autre part de manière coulissante au dossier (14), apte à solidariser le dossier (14) par rapport à l'assise (12), et
- un troisième jeu de bielles (38, 38'), articulé d'une part à la partie inférieure du dossier (14) et d'autre part à un support (40) appartenant au châssis du véhicule, apte à permettre le basculement du dossier (14) par rapport au logement (24).

6. Siège selon l'une des revendications précédentes,
**caractérisé en ce que** le passage de la position repliée à la position déployée d'utilisation du siège s'effectue par un basculement vers l'avant du premier jeu de bielles (50, 50') permettant le mouvement de l'assise par rapport au plancher et ainsi le basculement vers l'avant du troisième jeu de bielle (38, 38'), le deuxième jeu de bielles (52, 52') étant apte à maintenir le siège en position déployée d'utilisation.

7. Véhicule automobile comprenant le siège (10) selon l'une des revendications précédentes, **caractérisé en ce que** le plancher (26) comporte une cavité de rangement (28) dans laquelle, dans la position repliée, le siège (10) est entièrement rangé.
